# EUROPÄISCHE PATENTSCHRIFT

(11) **EP 2 152 556 B1**
(45) Veröffentlichungstag und Bekanntmachung des Hinweises auf die Patenterteilung: **11.06.2014**
(21) Anmeldenummer: 08749142.9
(22) Anmeldetag: 25.04.2008
(51) Int. Cl.: B60T 17/00, F16L 55/033

(54) **SCHALLDÄMPFER**
SILENCER
SILENCIEUX

(30) Priorität: 09.05.2007 DE 202007006627 U
(43) Veröffentlichungstag der Anmeldung: 17.02.2010
(73) Patentinhaber: KNORR-BREMSE Systeme für Nutzfahrzeuge GmbH, 80809 München (DE)
(72) Erfinder: WEBER, Stephan, 08056 Zwickau (DE); HÄCKER, Hans, 74343 Sachsenheim (DE); RÖCKLE, Frank, 71229 Leonberg (DE)
(74) Vertreter: Schönmann, Kurt
(86) Internationale Anmeldenummer: PCT/EP2008/003364
(87) Internationale Veröffentlichungsnummer: WO 2008/138465

(56) Entgegenhaltungen:
- EP-A- 0 537 483
- DE-A1- 2 904 529
- DE-A1- 4 306 397
- DE-A1- 10 341 668

## Beschreibung

Die Erfindung bezieht sich auf einen Schalldämpfer zum Dämpfen des Ausströmgeräusches von Druckluft aus Druckluftgeräten, insbesondere Druckluftgeräten in Fahrzeugen gemäß dem Oberbegriff des Patentanspruches 1. Ein solcher Schalldämpfer ist aus der DE 197 01 361 C1 bekannt.

Zum Ableiten von Druckluft und Entspannen derselben sind Schall- oder Geräuschdämpfer vorgesehen, die für Druckluftanlagen, insbesondere von Fahrzeugen, geeignet sind. Sie bestehen im allgemeinen aus einem topfartigen Gehäuse, das mit Schallschluckmaterial gefüllt ist. Das Gehäuse hat eine Einlaßöffnung und eine Auslaßöffnung, wobei die Auslaßöffnung in vielen Fällen am Topfboden angeordnet ist. Bei der DE 197 01 361 C1 sind zusätzlich noch Nebenluftwege vorgesehen, die beim Zusetzen des Schallschluckmaterials, sei es durch Verunreinigungen und/oder gefrierende Nässe, wirksam sind. Das Schallschluckmaterial ist ein das topfartige Gehäuse vollständig ausfüllendes Filtergestrick. Üblich ist es, ein solches gestricktes, meist schlauchförmiges Material ein- oder zweilagig zylindrisch zu wickeln und eine so gewickelte Filterpatrone in das Innenvolumen des topfartigen Gehäuses einzusetzen. Bei der Freifeld-Fahrzeug-Geräuschmessung nach der Richtlinie 70/157 EWG wird mit einem solchem Schalldämpfer ein Schalldruckpegel von 72dB(A) erreicht.

Die DE 43 06 397 A1 zeigt einen Schalldämpfer für ein strömendes gasförmiges Medium mit einem topfartigen Gehäuse, das eine Einlaß- und Auslaßöffnung aufweist, wobei im Innenraum des Gehäuses eine schalldämpfende Schicht aus geschlossenporigem Kunststoff angeordnet ist, die ihrerseits von einer hochabsorbierenden Auskleidung aus einem offenporigem Schaumstoff umgeben ist, der bis zur Innenwand des Gehäuses verläuft. Weiter ist im Inneren des Gehäuses eine Filterpatrone angeordnet, die in die offenporige Schaumstoffauskleidung eingebettet ist und bis zur der hochdämpfenden geschlossenporigen Schaumstoffschicht ragt.

Die DE 29 04 529 A zeigt ein Luftventil für eine Druckluftanlage mit einem Geräuschdämpfer der zwei hintereinander geschaltete durchbrochene Wandungen aufweist, durch deren Durchbrechungen Luft hindurchtritt. Beide Wandungen sind im Abstand zueinander angeordnet und der auf diese Weise zwischen den Wandungen gebildete Raum ist zumindest teilweise mit geräuschdämpfenden Füllstoff gefüllt. Als Füllstoff werden Kunststoffschaum, Mineralfasern, Filz, Stahlwolle oder eine Schüttung aus Kunststoffgranulat vorgeschlagen.

Wünschenswert ist es, die Schalldämpfungseigenschaften weiter zu verbessern. Aufgabe der Erfindung ist es daher, den Schalldämpfer der eingangs genannten Art dahingehend zu verbessern, daß Druckluftgeräusche stärker gedämpft werden. Diese Aufgabe wird durch die im Schutzanspruch 1 angegebenen Merkmale gelöst. Vorteilhafte Ausgestaltungen und Weiterbildungen der Neuerung sind den Unteransprüchen zu entnehmen.

Das Grundprinzip der Neuerung besteht darin, zwischen die Filterpatrone aus gewickeltem gestricktem Material und die Innenwand des Gehäuses eine Schicht aus faserigem Material anzuordnen. Diese Schicht kann eine Filzmatte mit faserigem Material sein, die um die Filterpatrone aus dem gestrickten Material herumgewickelt ist. Die Schicht aus faserigem Material kann auch in Form von Flocken aufgebracht sein, die an der Innenwandung des Gehäuses angeklebt ist.

Vorzugsweise sind die Fasern des faserigen Materials Polyamidfasern. Sie haben etwa eine maximale Länge von 5mm, wobei die Dicke der Schicht aus faserigem Material in der Größenordnung von 1 bis 3mm liegt. Die Schicht aus faserigem Material kann nur an dem Topfmantel anliegen. Sie kann aber zusätzlich auch am Topfboden anliegen.

Es wird angenommen, daß diese zusätzliche Schicht aus faserigem Material Schwingungen der Patrone aus gestricktem Material dämpft und/oder die Patrone aus gestricktem Material vom Gehäuse entkoppelt. Damit werden Schwingungen des gestrickten Materials nicht direkt auf die Gehäuseinnenwand und damit das gesamte Gehäuse übertragen, sondern durch das faserige Material, das insoweit schlechte Schalleitungseigenschaften hat, vom Gehäuse ferngehalten. Die Fasern sind dabei überwiegend so ausgerichtet, daß sie schräg zur Gehäusewandung stehen. Sie liegen also weder parallel zur Gehäusewandung noch stehen sie senkrecht dazu. Damit werden die einzelnen Fasern der Schicht aus faserigem Material überwiegend auf Biegung beansprucht und haben dabei gute Schwingungsdämpfungseigenschaften.

Versuche mit einem Schalldämpfer nach der Neuerung ergaben einen Schalldruckpegel in der Freifeld-Fahrzeug-Geräuschmessung nach der oben genannten Richtlinie 70/157 EWG von 69dB(A). Somit wurde gegenüber dem Stand der Technik eine Verbesserung von 3dB(A) erreicht.

Im folgenden wird die Neuerung anhand eines Ausführungsbeispieles im Zusammenhang mit der Zeichnung ausführlicher beschrieben. Es zeigt:
- Fig. 1: Einen schematischen Querschnitt eines Schalldämpfers nach der Neuerung; und
- Fig. 2: einen Schnitt längs der Linie II-II der Fig. 1 und damit eine geschnittene Draufsicht auf das topfartige Gehäuse des Schalldämpfers.

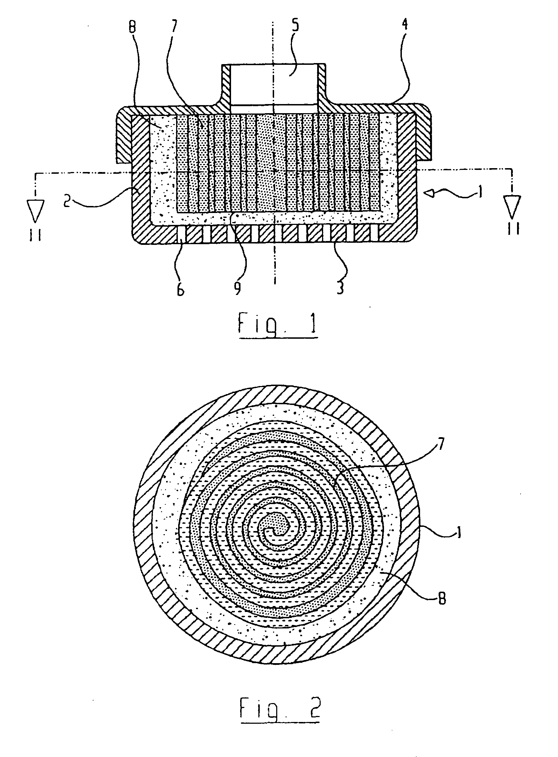

Der Schalldämpfer der Fig. 1 hat ein topfartiges Gehäuse 1 mit einem zylindrischen Topfmantel 2 und einem Topfboden 3. Das topfartige Gehäuse ist durch einen Deckel 4 verschlossen, der eine Einlaßöffnung 5 für Druckluft aus einem Druckluftgerät aufweist. Der Deckel 4 wird in irgendeiner bekannten Weise an dem topfartigen Gehäuse 1 befestigt, beispielsweise aufgeschraubt oder mit einem Rast- bzw. Schnappverschluß verbunden. Der Topfboden 3 hat mehrere Auslaßöffnungen 6, die beispielsweise sternförmig verlaufende geradlinige Schlitze sind.

Im Innenraum des Gehäuses 1 ist eine Patrone 7 eines zur Geräuschdämmung dienenden Schallschluckmaterials in Form eines Filtergestrickes angeordnet. Wie im Stand der Technik bekannt, wird hierfür gestricktes Bandmaterial oder gewalztes schlauchförmiges Gestrick ein- oder mehrlagig gewickelt, so daß sich im wesentlichen ein zylindrischer Körper ergibt. Im dargestellten Ausführungsbeispiel ist das Gestrick zweilagig, wie durch die unterschiedliche Schraffur angedeutet.

Zur Verbesserung der Schalldämpfungseigenschaften ist zwischen der Patrone 7 und der Innenwandung des Gehäuses 1 eine Schicht aus faserigem Material 8 angeordnet. Diese Schicht berührt zumindest den Topfmantel 2 und den Außenumfang der Patrone 7. Sie kann aber auch zusätzlich zwischen dem Topfboden 3 und der zum Boden weisenden Stirnseite 9 der Patrone 7 angeordnet sein.

Das faserige Material 8 besteht bei einem ersten Ausführungsbeispiel der Erfindung aus einer Filzmatte mit verfilzten Einzelfasern. Vorzugsweise sind diese Fasern Polyamidfasern. Vorzugsweise haben sie eine maximale Länge von 5mm, wobei die Schichtdicke der Schicht aus faserigem Material 8 in der Größenordnung von 1 bis 3mm liegt und vorzugsweise 2mm beträgt.

Der überwiegende Anteil der Fasern des faserigen Materials 8 ist schräg zur jeweils benachbarten Wand des Gehäuses 1 angeordnet.

Nach einem anderen Ausführungsbeispiel der Erfindung kann die Schicht aus faserigem Material 8 auch in Form von Faserflocken an der Innenwand des Gehäuses angebracht sein. Hierzu wird in der Praxis die Innenwand des Gehäuses zunächst angeätzt und die Faserflocken werden dann aufgebracht und durch einen Klebstoff mit der Gehäuseinnenwand verbunden.

Die Schicht aus faserigem Material 8 bewirkt somit eine Entkopplung zwischen der Patrone aus dem gestrickten Material und dem Gehäuse 1, so daß die von dem gestrickten Material ausgehenden Schwingungen nicht unmittelbar auf das Gehäuse 1 übertragen werden. Zusätzlich wird angenommen, daß auch Schwingungen der Patrone 7 zusätzlich gedämpft werden. Zusammenfassend wird durch die Schicht aus faserigem Material eine erhebliche Verbesserung der Schalldämpfung erreicht.

## Patentansprüche

1. Schalldämpfer zum Dämpfen des Ausströmgeräusches von Druckluft aus Druckluftgeräten, insbesondere Druckluftgeräten von Fahrzeugen, mit einer Einlaßöffnung (5), mindestens einer Auslaßöffnung (6) und einem zwischen diesen Öffnungen angeordneten topfartigen Gehäuse (1), das einen Topfmantel (2)und einen Topfboden (3) aufweist, wobei im Innenraum des topfartigen Gehäuses (1) ein zur Geräuschdämmung dienendes Schallschluckmaterial in Form einer Patrone (7)eines Filtergestrickes angeordnet ist, **dadurch gekennzeichnet, daß** zwischen der Patrone (7) und dem Topfmantel (2) eine Schicht aus faserigem Material (8) angeordnet ist und daß der überwiegende Anteil der Fasern des faserigen Materials (8) schräg zum Topfmantel (2) angeordnet ist.

2. Schalldämpfer nach Anspruch 1, **dadurch gekennzeichnet, daß** das faserige Material (8) in Form einer Filzmatte um den Außenumfang des Filtergestrickes gewickelt ist.

3. Schalldämpfer nach Anspruch 1, **dadurch gekennzeichnet, daß** die Schicht aus faserigem Material (8) zusätzlich am Topfboden (3) angeordnet ist und daß der überwiegende Anteil der am Topfboden (3) angeordneten Fasern des faserigen Materials (8) schräg zum Topfboden (3) angeordnet ist.

4. Schalldämpfer nach den Ansprüchen 1 oder 3, **dadurch gekennzeichnet, daß** die Schicht aus faserigem Material (8) an dem Topfmantel (2) und/oder am Topfboden (3) in Flockenform angebracht ist.

5. Schalldämpfer nach Anspruch 4, **dadurch gekennzeichnet, daß** die Schicht aus faserigem Material (8) angeklebt ist.

6. Schalldämpfer nach einem der Ansprüche 1 bis 5, **dadurch gekennzeichnet, daß** die Fasern des faserigen Materials (8) Polyamid-Fasern sind.

7. Schalldämpfer nach einem der Ansprüche 1 bis 6, **dadurch gekennzeichnet, daß** die Fasern des faserigen Materials (8) eine maximale Länge von 5mm haben.

8. Schalldämpfer nach einem der Ansprüche 1 bis 7, **dadurch gekennzeichnet, daß** die Schicht aus faserigem Material (8) eine Dicke von 1 bis 3mm hat, insbesondere von 2mm.

## Claims

1. Silencer for damping the outflow noise of compressed air from compressed air appliances, in particular compressed air appliances of vehicles, comprising an inlet port (5), at least one outlet port (6) and a pot-like housing (1) which is arranged between these ports and which has a pot casing (2) and a pot base (3), a sound-absorbing material in the form of a cartridge (7) of a filter knit, serving for noise damping, being arranged in the interior of the pot-like housing (1), **characterised in that** a layer of fibrous material (8) is arranged between the cartridge (7) and the pot casing (2), and **in that** the predominant part of the fibrous material (8) is arranged at an angle to the pot casing (2).

2. Silencer according to claim 1, **characterised in that** the fibrous material (8) is wound in the form of a felt mat around the outer circumference of the filter knit.

3. Silencer according to claim 1, **characterised in that** the layer of fibrous material (8) is additionally arranged on the pot base (3), and **in that** the predominant part of the fibrous material (8) is arranged at an angle to the pot base (3).

4. Silencer according to any of claims 1 to 3, **characterised in that** the layer of fibrous material (8) is applied in flock form to the pot casing (2) and/or to the pot base (3).

5. Silencer according to claim 4, **characterised in that** layer of fibrous material (8) is glued on.

6. Silencer according to any of claims 1 to 5, **characterised in that** the fibres of the fibrous material (8) are polyamide fibres.

7. Silencer according to any of claims 1 to 6, **characterised in that** the fibres of the fibrous material (8) have a maximum length of 5 mm.

8. Silencer according to any of claims 1 to 7, **characterised in that** the layer of fibrous material (8) has a thickness of 1 mm to 3 mm, in particular of 2 mm.

## Revendications

1. Silencieux pour atténuer le bruit de l'air comprimé sortant d'appareils à air comprimé, notamment d'appareils à air comprimé de véhicules automobiles, comprenant une ouverture (5) d'entrée, au moins une ouverture (6) de sortie et un pot (1), qui est disposé entre ces ouvertures et qui a une surface (2) latérale et un fond (3), dans lequel, à l'intérieur du pot (1), est disposée une matière absorbant le son et servant à atténuer le bruit, sous la forme d'une cartouche (7) d'un tricot filtrant, **caractérisé en ce qu'**entre la cartouche (7) et la surface (2) latérale du pot est disposée une couche en une matière (8) fibreuse et **en ce que** la proportion prépondérante des fibres de la matière (8) fibreuse est disposée en biais par rapport à la surface (2) latérale du pot.

2. Silencieux suivant la revendication 1, **caractérisé en ce que** la matière (8) fibreuse est enroulée sous la forme d'une nappe de feutre autour du pourtour extérieur du tricot filtrant.

3. Silencieux suivant la revendication 1, **caractérisé en ce que** la couche en matière (8) fibreuse est disposée en outre au fond (3) du pot et **en ce que** la proportion prépondérante des fibres, disposées au fond (3) du pot, de la matière (8) fibreuse est disposée en biais par rapport au fond (3) du pot.

4. Silencieux suivant les revendications 1 ou 3, **caractérisé en ce que** la couche en matière (8) fibreuse est mise sous la forme de flocons sur la surface (2) latérale du pot et/ou sur le fond (3) du pot.

5. Silencieux suivant la revendication 4, **caractérisé en ce que** la couche en matière (8) fibreuse est collée.

6. Silencieux suivant l'une des revendications 1 à 5, **caractérisé en ce que** les fibres de la matière (8) fibreuse sont des fibres de polyamide.

7. Silencieux suivant l'une des revendications 1 à 6, **caractérisé en ce que** les fibres de la matière (8) fibreuse ont une longueur maximum de 5 mm.

8. Silencieux suivant l'une des revendications 1 à 7, **caractérisé en ce que** la couche en matière (8) fibreuse a une épaisseur de 1 à 3 mm, notamment de 2 mm.
